# EUROPEAN PATENT SPECIFICATION

(11) **EP 3 311 026 B1**
(45) Date of publication and mention of the grant of the patent: **17.02.2021**
(21) Application number: 16725357.4
(22) Date of filing: 23.05.2016
(51) Int. Cl.: F03D 7/02

(54) **FREQUENCY REGULATION USING WIND TURBINE GENERATORS**
FREQUENZ-REGELUNG DURCH VERWENDUNG VON WINDTURBINENGENERATOREN
RÈGLEMENT DE FRÉQUENCE EN UTILISANT DES GÉNÉRATEURS D'ÉOLIENNE

(30) Priority: 16.06.2015 DK 201570370
(43) Date of publication of application: 25.04.2018
(73) Proprietor: Vestas Wind Systems A/S, 8200 Aarhus N (DK)
(72) Inventor: GARCIA, Jorge Martinez, 41920 San Juan de Aznalfarache, Sevilla (ES); KJÆR, Martin Ansbjerg, 8462 Harlev J (DK); CAPONETTI, Fabio, 8230 Åbyhøj (DK)
(74) Representative: Vestas Patents Department
(86) International application number: PCT/DK2016/050140
(87) International publication number: WO 2016/202338

(56) References cited:
- WO-A1-2014/012553
- WO-A1-2014/026688
- WO-A1-2014/090255
- US-A1- 2011 001 318
- US-A1- 2015 159 627

## Description

### BACKGROUND

### Field of the Invention

Embodiments presented in this disclosure generally relate to techniques for operating wind turbine generators to provide frequency regulation to an operatively connected electrical grid.

### Description of the Related Art

Modern power generation and distribution networks increasingly rely on renewable energy sources, such as wind turbine generators. In some cases, the wind turbine generators may be substituted for conventional, fossil fuel-based generators. Beyond merely generating and delivering electrical power, the wind turbine generators are responsible for contributing to grid stability through frequency regulation. However, natural variations in wind conditions can affect the ability of wind turbines to predictably deliver power and regulate grid frequency. The document US2015/159627 A1 discloses a method of frequency regulation of an electrical grid coupled to a wind turbine which is operated to consume electrical power from the grid.

### SUMMARY

One embodiment disclosed herein includes a method and a control arrangement for frequency regulation of an electrical grid operatively coupled with at least one wind turbine generator. The method and control arrangement include operating the wind turbine generator to consume electrical power from the electrical grid.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.
Figure 1 illustrates a diagrammatic view of a horizontal-axis wind turbine, according to one embodiment.
Figure 2 illustrates a wind power plant connected with an electrical grid, according to one embodiment.
Figure 3 illustrates a method of frequency regulation of an electrical grid operatively coupled with at least one wind turbine generator, according to one embodiment.
Figure 4 illustrates exemplary frequency regulation modes during low-wind or no-wind conditions, according to one embodiment.
Figure 5 illustrates an exemplary frequency regulation mode during normal wind conditions, according to one embodiment.
Figure 6 illustrates a method of increasing a ramp rate capacity of a wind power plant comprising a plurality of wind turbine generators, according to one embodiment.
Figure 7 illustrates exemplary operation of a wind power plant providing increased ramp rate capacity during a power curtailment, according to one embodiment.
Figure 8 illustrates exemplary operation of a wind power plant providing increased ramp rate capacity during low-wind conditions, according to one embodiment.

To facilitate understanding, identical reference numerals have been used, where possible, to designate identical elements that are common to the figures. It is contemplated that elements disclosed in one embodiment may be beneficially utilized on other embodiments without specific recitation.

### DESCRIPTION OF EXAMPLE EMBODIMENTS

Embodiments of the disclosure are generally directed to operating a wind turbine generator to consume electrical energy from an electrical grid, or in some cases to increase the electrical consumption of the wind turbine generator's auxiliary systems, in order to provide frequency regulation for an operatively coupled electrical grid. In some cases, operating one or more wind turbine generators of a wind farm in this manner may further provide an increased ramping rate capacity for the wind farm during a power curtailment and/or during low-wind or no-wind conditions. While traditionally, a wind turbine generator may have been shut down when wind conditions are not suitable for generation of electrical power, operating the wind turbine generator according to techniques described herein permits the wind turbine generator to provide a marketable service during those unsuitable wind conditions, as the frequency regulation capacity may be contracted or otherwise generate revenue for the operator of the wind turbine generator.

While discussed primarily in the context of wind turbine generators and wind power, the person of ordinary skill will understand that the principles and techniques described herein may be applied to power generation systems of different types. For example, other types of renewable energy systems rely on natural resources such as sunlight, rain, tides, waves, geothermal heating, etc. to perform power generation. In some cases - and similar to wind power - the ability of these natural resources to generate electrical power may vary with time. The renewable energy systems may be operated to have increased electrical consumption to provide frequency regulation for an operatively coupled electrical grid, such as operating the renewable energy systems as electrical consumers during periods of low or no power production. While conventional energy generation systems such as those employing fossil fuels (e.g., coal, petroleum, natural gas) or nuclear fuels are not typically subject to the same variability as renewable energy systems, the conventional systems may also offer frequency regulation capacity through increased electrical consumption of auxiliary systems.

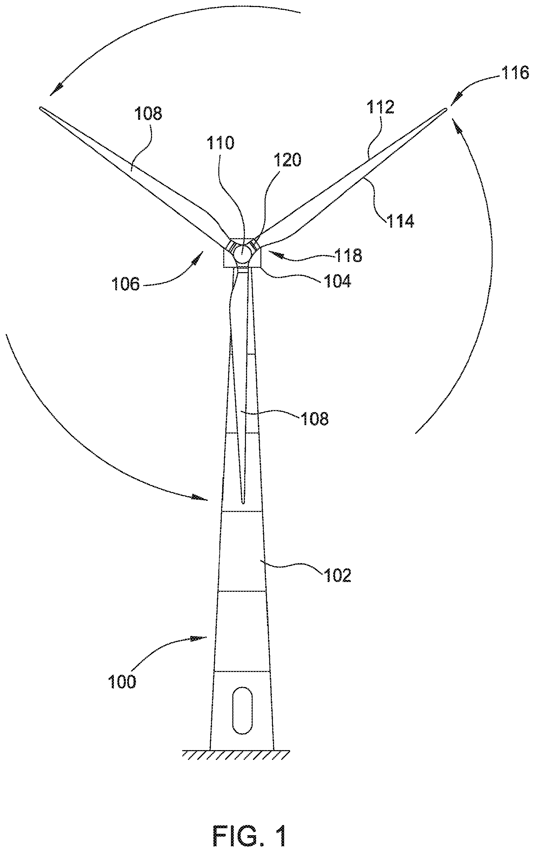

Figure 1 illustrates a diagrammatic view of a horizontal-axis wind turbine 100. The wind turbine 100 typically includes a tower 102 and a wind turbine nacelle 104 located at the top of the tower 102. A wind turbine rotor 106 may be connected with the nacelle 104 through a low speed shaft extending out of the nacelle 104. The wind turbine rotor 106 includes three rotor blades 108 mounted on a common hub 110, but may include any suitable number of blades, such as one, two, four, five, or more blades. The blade 108 (or airfoil) typically has an aerodynamic shape with a leading edge 112 for facing into the wind, a trailing edge 114 at the opposite end of a chord for the blade 108, a tip 116, and a root 118 for attaching to the hub 110 in any suitable manner.

For some embodiments, the blades 108 may be connected to the hub 110 using pitch bearings 120 such that each blade 108 may be rotated around its longitudinal axis to adjust the blade's pitch. The pitch angle of a blade 108 may be controlled by linear actuators or stepper motors, for example, connected between the hub 110 and the blade 108. Blade pitch control may also be used among others systems to maximize the power generated below rated wind speeds and to reduce the power generated above the rated wind speed to prevent excessive loading on turbine components, e.g., the generator and gearbox. Although the following embodiments are described in the context of a wind turbine, the embodiments are not limited to such. Indeed, this disclosure may apply to any power generation system capable of consuming electrical power to support frequency regulation of an operatively connected electrical grid.

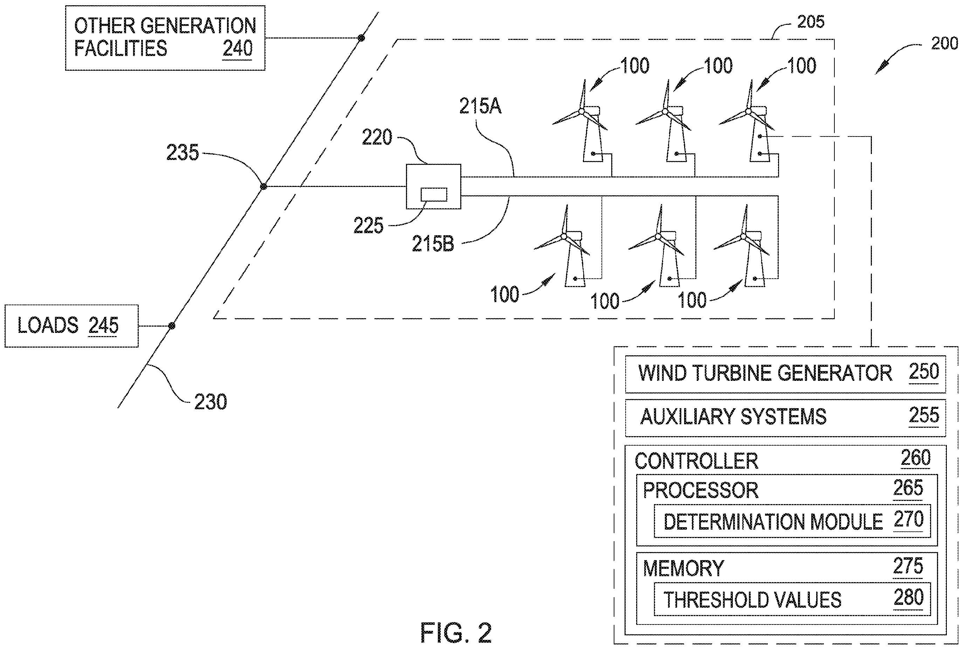

Figure 2 illustrates a wind power plant connected with an electrical grid, according to one embodiment. The wind power plant 205 includes a plurality of wind turbines 100 operatively connected with an electrical grid 230 at a point of common coupling (PCC) 235. In some embodiments, the wind turbines 100 of the wind power plant 205 are coupled with a substation 220 including a plant-level controller 225; in this case, the output from the substation 220 is coupled with electrical grid 230. The wind turbines 100 may be grouped into a number of branches 215A, 215B that are connected with a substation 220 which may include a plant-level controller 225. The output of the substation 220 may connect to the PCC 235. In other embodiments, one or more wind turbines may directly connect to the electrical grid without being directed and/or grouped through substation 220.

The electrical grid 230 represents transmission and/or distribution grids, which may be operated at one or more voltages. The electrical grid 230 generally includes a number of transmission lines, transformers, substations, etc. The electrical grid 230 may be connected with one or more other generation facilities 240, such as one or more additional wind power plants, or one or more different types of generation facilities, such as fossil fuel-based, geothermal, solar, hydroelectric, nuclear, and so forth. The electrical grid 230 is also connected with one or more loads 245, which generally represent industrial, commercial, and/or residential electricity consumers.

Generally, differences in the amount of electrical power generated (e.g., produced by wind power plant 205 and other generation facilities 240) and the amount of electrical power demanded by loads (e.g., loads 245) on an electrical grid cause the grid frequency to deviate from its prescribed or nominal value. Typical values of nominal grid frequency are 60 Hz in the US and 50 Hz in Europe. One example of grid frequency deviation includes when power demand exceeds the power generated - the difference in energy can be drawn from the kinetic energy (inertia) of the wind turbine generator 250, which causes the rotor (e.g., wind turbine rotor 106 of Figure 1) to slow down and the grid frequency to decrease accordingly. Put another way, the grid frequency is governed by the collective inertia of the rotating machinery connected to the electrical grid 230, the rotating machinery included in the wind power plant 205 and/or the other generation facilities 240. An energy deficit causes the rotating machinery to slow. Conversely, when power generation exceeds the amount of power demand, the grid frequency may increase. In some cases, the wind turbine generators may be configured to operate within a predetermined frequency range, such as ±1% of the nominal grid frequency, before disconnecting or performing other regulation procedures to restore the grid frequency to within the predetermined frequency range.

Each wind turbine 100 includes a wind turbine generator 250 configured to convert the mechanical energy of the wind turbine rotor 106 into one or more phases of electrical power, which is ultimately delivered to the electrical grid 230 and the loads 245 connected thereto. In various embodiments, the wind turbine generator 250 produces electrical power while operated by controller 260 in a distinct generator mode. In some cases, the controller 260 may operate the wind turbine generator 250 in a separate "motor" (or equivalent) mode, in which the wind turbine generator 250 is configured to consume electrical power from the electrical grid 230 and/or from other coupled electrical sources. In many cases, the controller 260 may operate the wind turbine generator 250 in the motor mode in limited circumstances and in order to perform particular limited-scope functions for the wind turbine. For example, the motor mode may be used during the commissioning and calibration of the wind turbine 100 to position the blades. In some cases, the motor mode is not typically used during "normal" operation of the wind turbine generator 250 (i.e., while operated to generate and deliver electrical power to the electrical grid 230).

The wind turbine 100 includes a number of auxiliary systems 255 that are generally used to support the start-up and operation of the wind turbine 100. Some non-limiting examples of auxiliary systems 255 include fans for cooling wind turbine power components (*e.g*., a power transformer), a cooling water pump for cooling the wind turbine generator 250, and a heating system for pre-heating fluids for the wind turbine generator 250. Additional non-limiting examples of auxiliary systems 255 include climate control systems such as air conditioning, heating, dehumidifying, etc. for maintaining a suitable operating environment for computer-based equipment such as controller 260, for human technicians, etc. Auxiliary systems 255 may also include internal and/or external lighting for the wind turbine 100.

In many cases, the auxiliary systems 255 are operated in an economical manner, consuming only minimal amounts of electrical power. However, in some embodiments disclosed herein, it may be beneficial to operate the auxiliary systems 255 to consume greater amounts of electrical power to thereby provide frequency regulation for the electrical grid 230. Some examples of increased power consumption include increasing the speed of fans, setting lower or higher temperature setpoints than required, using internal and external lighting, etc. In one embodiment, increased power consumption can be achieved through the concurrent operation of auxiliary systems 255 that generally have offsetting or opposing effects. For example, concurrently operating heating and cooling systems for the wind turbine generator might ordinarily be considered a waste of energy, but the effects of the heating system may be offset by the effects of the cooling system while increasing electrical consumption to provide greater frequency regulation capacity.

In some embodiments, the concurrent operation of auxiliary systems 255 may be controlled based on their characteristics. For example, say the heating system operating at full capacity generates heat faster than the cooling system at full capacity is capable of dissipating heat. If both systems were to be operated at full capacity, the result would generally be an increasing temperature of the associated wind turbine generator, which might not be desirable. Although operating the heating system at its capacity might be desirable to increase its electrical demand and provide greater grid frequency regulation capacity, the controller 260 may limit the output of the heating system so that its heating effects can be completely offset by the cooling system.

The controller 260 includes processor 265 and memory 275. Processor 265 may have any suitable form, such as a general purpose microprocessor, a controller, an application-specific integrated circuit (ASIC), and so forth. In some embodiments, the processor 265 comprises parts of (or all of) one or more integrated circuits (ICs) and/or other circuitry components. In some embodiments, the processor 265 also comprises electronically-readable instructions, such as firmware code, software code, and the like. In some embodiments, components comprising the processor 265 are located together, such as being included in a common printed circuit board. Processor 265 is further coupled with a memory 275. The memory 275 may include a variety of computer-readable media selected for their size, relative performance, or other capabilities: volatile and/or non-volatile media, removable and/or non-removable media, etc. Memory 275 may include registers, cache, random access memory (RAM), storage, etc. Storage included as part of memory 275 may typically provide a non-volatile memory for the processor 265, and may include one or more different storage elements such as Flash memory, a hard disk drive, a solid state drive, an optical storage device, and/or a magnetic storage device.

The processor 265 may include a determination module 270 configured to determine one or more aspects of the operational environment for the wind turbine 100, such as measuring characteristics of the electrical grid 230 (*e.g*., grid voltage, grid frequency, etc.), measuring wind conditions at the wind turbine 100, and so forth. The determination module 270 may be embodied in hardware or firmware, as software stored in memory 275, or combinations thereof. Furthermore, the determination module 270 may be implemented solely within the controller 260 of wind turbine 100, distributed across controllers of multiple wind turbines 100 of the wind power plant 205, and/or distributed between controller(s) 260 and the plant-level controller 225. The determination module 270 may be coupled with one or more sensor-based devices, such as voltage sensors, current sensors, anemometers, etc. The memory 275 may include one or more threshold values 280 against which the processor 265 compares the determined aspects. For example, threshold values 280 can include upper and lower grid frequencies forming a range around a nominal grid frequency value. If the determined grid frequency falls outside the range, the controller may perform one or more actions, such as beginning frequency regulation using the wind turbine generator 250, increasing the amount of frequency regulation applied, and so forth.

By selectively increasing the electrical power demand of a wind turbine generator 250 - through operating in a distinct motor mode and/or operating the auxiliary systems 255 to increase their electrical consumption - the balance between generated and consumed electrical power on the electrical grid 230 may be better controlled to maintain a desired grid frequency. Moreover, the operation can be performed by the wind turbine generator 250 even during periods of low wind or no wind, which are generally unsuitable for power generation purposes. The frequency regulation capacity may be contracted or otherwise marketable to produce revenue for the operator of the wind turbine generators. Additionally, the operation of one or more wind turbine generators 250 within a wind power plant 105 as electrical consumers - instead of merely shutting down the wind turbine generators 250 - generally increases the ability of the wind power plant 105 to ramp power output up and down (also referred to as "ramp rate capacity").

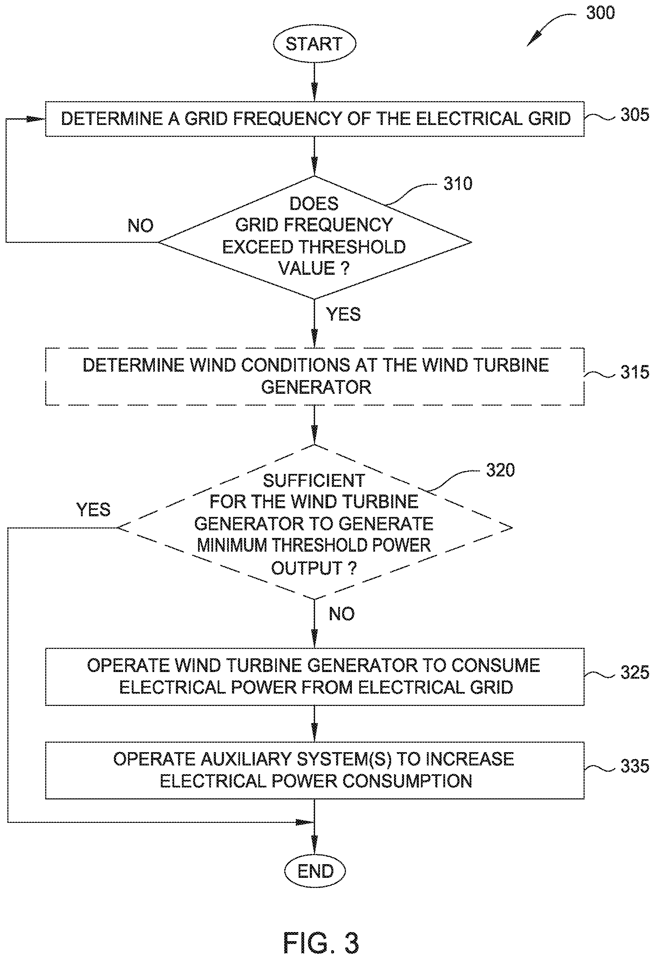

Figure 3 illustrates a method of frequency regulation of an electrical grid operatively coupled with at least one wind turbine generator, according to one embodiment. In some embodiments, the method may be performed by a determination module included in a wind turbine-level controller and/or plant-level controller. Method 300 begins at block 305, where the controller (or the determination module) determines the frequency of the electrical grid. In some cases, the controller use measurements provided by sensors such as voltage or current sensors.

At block 310, the determination module determines whether the grid frequency exceeds a threshold value. In some cases, the threshold value relates to a frequency range surrounding a nominal grid frequency, such as 50 or 60 Hz. For example, the threshold value could be 1% more than the nominal grid frequency. If the grid frequency does not exceed the threshold value ("NO"), the method may return to block 305 and continue monitoring the grid frequency. However, if the grid frequency exceeds the threshold value ("YES"), the method proceeds to optional block 315, or to block 325.

In some embodiments, the controller may operate the wind turbine generator and/or auxiliary systems to provide frequency regulation for the electrical grid, irrespective of local wind conditions. In these embodiments, the method proceeds from block 310 to block 325. In other embodiments, the local wind conditions may be considered when determining whether to provide frequency regulation. Accordingly, at optional block 315 the controller determines wind conditions at the wind turbine generator. The controller may receive data from one or more sensors to measure wind conditions, such as anemometers, light radar (LIDAR) sensors, etc. At the optional block 320, the controller determines whether the wind conditions are sufficient for the wind turbine generator to generate a minimum threshold power output. In some embodiments, the minimum threshold power output may reflect a percentage of the rated power output. The minimum threshold power output may be prescribed by administrative regulation (such as local grid codes) or perhaps operational considerations for the wind turbine generator, such as mechanical limits. In one example, the minimum threshold power output is 20% of the rated power output. Accordingly, a 3 megawatt (MW) rated wind turbine generator would have a minimum threshold power output of 600 kilowatts (kW). Generally, for a power output that is less than the minimum threshold power output (*e.g*., 600 kW), the controller may be configured to shut down the wind turbine generator from producing electrical power.

If the wind conditions are sufficient to generate minimum threshold power ("YES"), the wind turbine generator may continue to generate electrical power, and the method may end. In this case, the controller may provide frequency regulation by adjusting the power output from the wind turbine generator. Alternatively, the method may return to block 315 and continue monitoring the wind conditions. However, if the wind conditions are not sufficient to generate the minimum threshold power ("NO"), the method proceeds to block 325.

At block 325, the controller operates the wind turbine generator to consume electric power from the electrical grid. In some cases, this operation begins with the wind turbine generator in a shut-down state. In some embodiments, the controller may operate the wind turbine generator in a "motor mode" that is distinct from an electrical generation mode. The controller may control the amount of electrical consumption of the wind turbine generator based on the amount of frequency regulation desired.

At block 335, the controller operates auxiliary systems of the wind turbine to increase their electrical power consumption. In some embodiments, increasing electrical power consumption includes increasing fan speeds, setting lower or higher temperature setpoints, etc. In some embodiments, increasing electrical power consumption includes concurrently operating auxiliary systems that provide offsetting or opposing effects, such as a heating system and a cooling system that counteract with respect to the temperature profile of one or more wind turbine components. The electrical power consumption of the wind turbine may be increased thereby while the wind turbine components continue to operate within a range of acceptable temperatures. In an alternative embodiment, the controller may operate the auxiliary systems to increase electrical power consumption even while the wind turbine generator generates electrical power, providing frequency regulation for the electrical grid by one or both of reducing power output and increasing power consumption. Method 300 ends following completion of block 335.

In some embodiments, the blocks 325, 335 may be performed concurrently or in a reversed order. In some embodiments, the blocks 325, 335 may be performed as a tiered response to the grid frequency exceeding the threshold value. For example, the electrical power consumption of auxiliary systems may generally be ramped up and down more rapidly than transitioning between operational modes of the wind turbine generator. Thus, in one embodiment, block 335 may be performed as a "first tier" response, as the auxiliary systems may be more responsively controlled to handle relatively minor grid frequency excursions. Accordingly, block 325 may be performed as a "second tier" response for more severe grid frequency excursions that exceed the frequency regulation capacity available through the auxiliary systems.

In some alternative embodiments of method 600, the blocks 315, 320 may be performed without performing blocks 305, 310. In other words, the controller may operate the wind turbine generator as an electrical load (block 325) or with increased electrical loading (*e.g*., increased consumption by auxiliary systems in block 335) when the wind conditions are not suitable for power generation, irrespective of the grid frequency. In this way, the ramp rate capacity of the wind power plant will be increased, when compared with a configuration in which the wind turbine generator would be shut down responsive to the unsuitable wind conditions.

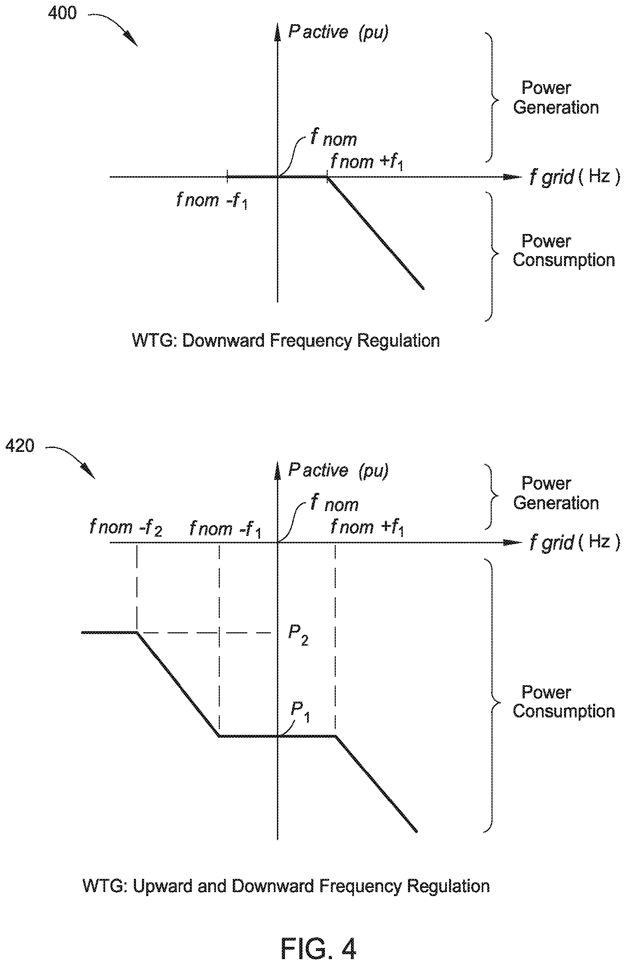

Figure 4 illustrates exemplary frequency regulation modes during low-wind or no-wind conditions, according to one embodiment. Plot 400 illustrates the power output for a wind turbine generator according to one exemplary frequency regulation mode. In some embodiments, the plot 400 can represent the combined power output of the wind turbine generator and the auxiliary systems of the wind turbine. The horizontal axis represents grid frequency f_{grid} in units of hertz (Hz). The vertical axis represents active power P_{active} in per-unit (pu) units, whether the active power is being generated or consumed by the wind turbine generator. For plot 400, the wind turbine generator is operated to provide frequency regulation in only a downward direction, that is, to decrease the grid frequency as appropriate.

Plot 400 illustrates a zero value of power generation or power consumption for the wind turbine generator across a range of frequencies surrounding a nominal grid frequency fₙₒₘ. This zero value may generally indicate that the wind turbine generator is shut down during low-wind or no-wind conditions for the range of frequencies. The value of fₙₒₘ can vary by location, such as 60 Hz in the US and 50 Hz in Europe, etc. In some embodiments, the fₙₒₘ may be replaced by any desired frequency value. Within the range of fₙₒₘ±f₁, the wind turbine generator does not provide any frequency regulation for the electrical grid. The frequency f₁ may generally represent an acceptable amount of variation of the grid frequency, which in some cases is prescribed by local grid codes. In one example, f₁ is 1% of fₙₒₘ, such that the value of f₁ would be 0.6 Hz for fₙₒₘ = 60 Hz, and 0.5 Hz for fₙₒₘ = 50 Hz.

For grid frequencies greater than fₙₒₘ+f₁, the controller operates the wind turbine generator and/or auxiliary systems to increase power consumption. The amount of power consumption generally increases with increasing grid frequencies. Although depicted as linear, the relation between power consumption and grid frequency may be in any suitable form (non-linear, piecewise, stepwise, etc.).

Plot 420 illustrates the power output for a wind turbine generator according to another exemplary frequency regulation mode. In some embodiments, the plot 420 can represent the combined power output of the wind turbine generator and the auxiliary systems of the wind turbine. In this case, the wind turbine generator is configured to provide both upward and downward frequency regulation. Within the range of fₙₒₘ±f₁, the controller operates the wind turbine generator to consume a constant amount of power P₁. For grid frequencies greater than fₙₒₘ+f₁, the wind turbine generator provides a downward frequency regulation in a similar manner as described for plot 400.

For grid frequencies less than fₙₒₘ-f₁, the wind turbine generator provides upward frequency regulation by decreasing its power consumption with decreasing grid frequencies. Continuing to follow the decreasing grid frequency values, the wind turbine generator may reach a minimum power consumption value P₂ at a particular frequency fₙₒₘ-f₂. In some embodiments, the minimum power consumption value P₂ is close to zero, as the rotor speed of the wind turbine generator is not governed by the aerodynamic properties of the blades in a motor mode. In some embodiments, P₂ can reflect a minimum power consumption of the auxiliary systems.

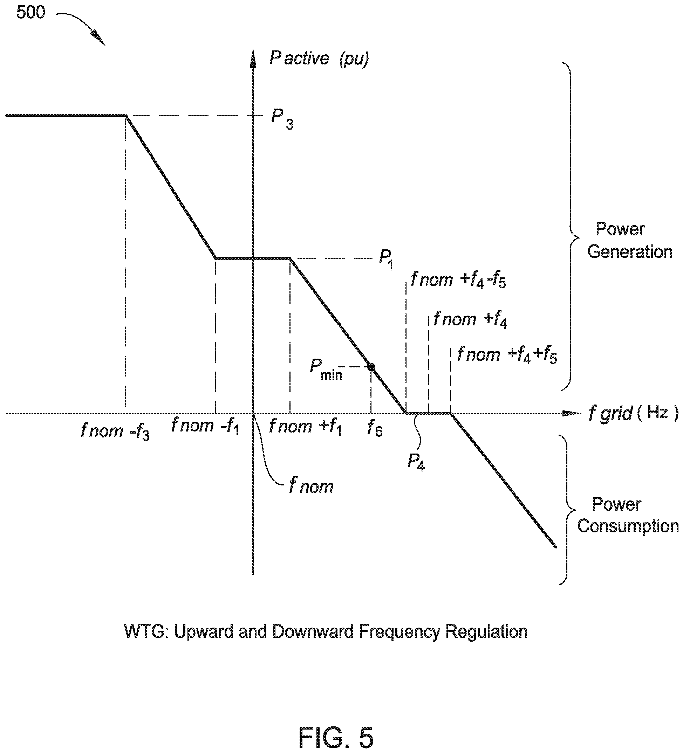

Figure 5 illustrates an exemplary frequency regulation mode during normal wind conditions, according to one embodiment. Plot 500 illustrates the power output for a wind turbine generator according to one exemplary frequency regulation mode. In some embodiments, the plot 500 can represent the combined power output of the wind turbine generator and the auxiliary systems of the wind turbine. The person of ordinary skill will recognize that even while the wind turbine generator is generating power, the power consumption of the auxiliary systems may be increased to reduce the net power output of the wind turbine, and vice versa.

Within the range of fₙₒₘ±f₁, the controller operates the wind turbine generator to generate a constant amount of power P₁. For grid frequencies less than fₙₒₘ-f₁, the wind turbine generator provides upward frequency regulation by increasing its power generation with decreasing grid frequencies. The wind turbine generator may reach a maximum power generation value P₃ at a particular frequency fₙₒₘ-f₃.

For grid frequencies greater than fₙₒₘ+f₁, the controller operates the wind turbine generator to decrease power generation with increasing grid frequency values. The minimum power generation value Pₘᵢₙ of the wind turbine generator is reached at a particular frequency f₆. In some embodiments, Pₘᵢₙ may correspond to a percentage of the rated power output of the wind turbine generator. For grid frequency values exceeding f₆, the controller may be required to shut down the wind turbine generator from power generation. In some embodiments, the controller causes the shut down wind turbine generator to enter a motor mode to provide further downward frequency regulation for the electrical grid. For example, the wind turbine generator may remain in a shut down state within a grid frequency range fₙₒₘ+f₄±f₅, neither generating nor consuming power (power level P₄ approximately equals zero). However, for frequencies greater than fₙₒₘ+f₄+f₅, the controller operates the wind turbine generator to increase power consumption to further increase the loading of the electrical grid and thereby reduce the grid frequency f_{grid}. The amount of power consumption for the wind turbine generator generally increases with increasing grid frequencies.

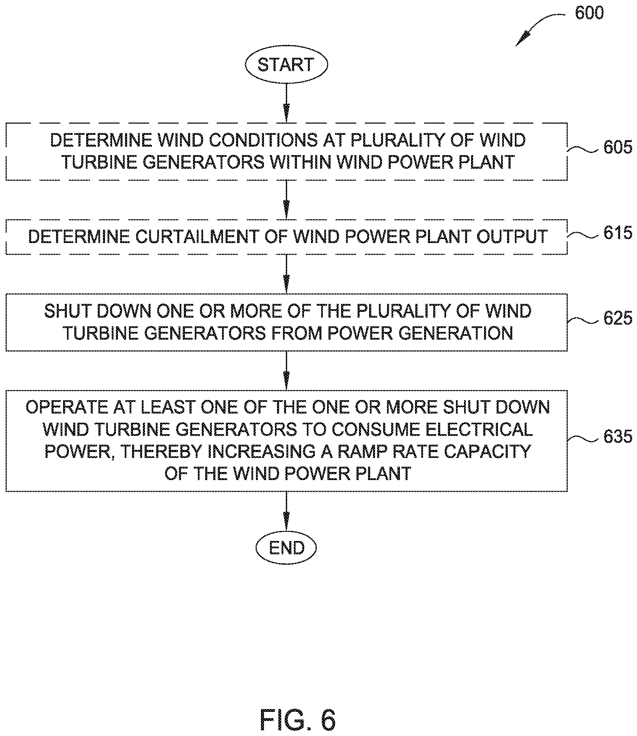

Figure 6 illustrates a method of increasing a ramp rate capacity of a wind power plant comprising a plurality of wind turbine generators, according to one embodiment. Method 600 may generally be performed by a plant-level controller in communication with wind turbine-level controllers.

Method 600 begins at the optional block 605, where the controller determines wind conditions at a plurality of wind turbine generators of the wind power plant. The controller may use data acquired from sensors disposed near each of the plurality of wind turbine generators (or groupings of the wind turbine generators) to measure the wind conditions.

At optional block 615, the controller determines a curtailment of the wind power plant output. As used herein, curtailment generally refers to generating an amount of power less than the amount of power that could be produced under the current wind conditions. Power curtailment may generally be used to address faults in the electrical grid or other transmission limitations.

Typically one or both of the optional blocks 605 and 615 may occur during method 600 prior to performing the subsequent blocks 625, 635. At block 625, one or more of the plurality of wind turbine generators are shut down by the controller. This may be responsive to the determinations made at blocks 605 and/or 615, such as in response to low-wind or no-wind conditions, or in response to a curtailment of the wind power plant output.

At block 635, the controller operates at least one of the one or more shut down wind turbine generators to consume electrical power and to thereby increase a ramp rate capacity of the wind power plant. In some embodiments, the plant-level controller signals to the particular wind turbine-level controllers to operate the corresponding wind turbine generators in a distinct motor mode, and may also prescribe the power consumption for each of the wind turbine generators. Method 600 ends following completion of block 635.

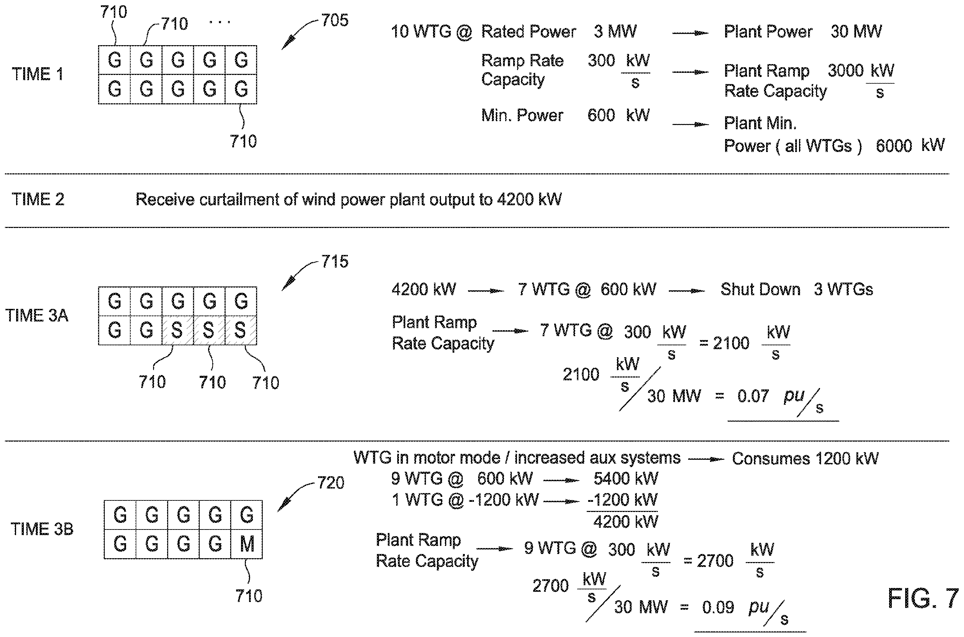

Figure 7 illustrates exemplary operation of a wind power plant providing increased ramp rate capacity during a power curtailment, according to one embodiment. In this example, a wind power plant in configuration 705 includes ten wind turbine generators 710. Each wind turbine generator 710 has a rated power of 3 megawatts (MW) and a ramp rate capacity of 300 kilowatts per second (kW/s). Furthermore, each wind turbine generator has a minimum power level of 600 kW; when wind conditions cause the output power to be less than the minimum, the wind turbine generator is shut down by the controller. The collective characteristics of the wind power plant include a 30 MW plant power rating, a plant ramp rate capacity of 3,000 kW/s (or 3 MW/s), and a plant minimum power of 6,000 kW (or 6 MW) with all wind turbine generators operating at their minimum power levels.

At Time 1, all ten of the wind turbine generators 710 are generating power ("G"). At Time 2, the wind power plant receives a curtailment of its output to 4,200 kW. As a result, the wind power plant controller must determine a different configuration for the wind turbine generators 710 to reduce the plant power level from the minimum of 6,000 kW to 4,200 kW. At Time 3A, the controller determines a configuration 715. The controller determines that seven wind turbine generators 710 operating at the minimum power of 600 kW meets the required 4,200 kW plant output, and accordingly shuts down three wind turbine generators 710 ("S"; hatched). With three shut down wind turbine generators 710, the plant ramp rate capacity is reduced to 2,100 kW/s (7 x 300 kW/s), which corresponds to 0.07 pu/s (2,100 kW/s / 30 MW).

However, at Time 3B, the controller determines an alternate configuration 720. Assume for purposes of this example that operating a wind turbine generator in motor mode with increased electrical consumption by the associated auxiliary systems consumes a total of 1,200 kW. By operating one or more wind turbine generators to consume electrical power, the power generated of the wind power plant does not need to be decreased as severely as in configuration 715.

In configuration 720, a single wind turbine generator 710 is transitioned into a motor mode ("M"), while the remaining nine wind turbine generators 710 generate power at the minimum of 600 kW each. Accordingly, the collective electrical generation of the plant is 5,400 kW (9 x 600 kW), and the electrical consumption is 1,200 kW (1 x 1,200), yielding a net generation of 4,200 kW and thereby meeting the curtailment requirement. With a single wind turbine generator operating in motor mode, the plant ramp rate capacity is only reduced to 2,700 kW/s (9 x 300 kW/s), which corresponds to 0.09 pu/s (2,700 kW/s / 30 MW). Accordingly, the wind power plant ramp rate capacity may be increased by virtue of operating one or more wind turbine generators in a motor mode, as compared to merely shutting down wind turbine generators to meet a power curtailment.

Thus, Figure 7 illustrates that by merely operating one or more wind turbine generators 710 in a motor mode, additional wind turbine generators 710 can remain in operation and thereby increase the ramp rate capacity of the wind power plant. Moreover, those wind turbine generator(s) 710 operating in the motor mode can contribute further to the wind power plant's ramp rate capacity. For example, say the transitioned wind turbine generator 710 (*i.e*., operating in motor mode) of configuration 720 provides an additional ramp rate capacity of 60 kW/s. The total ramp rate capacity for the wind power plant would thus be increased to 2760 kW/s or 0.092 pu/s.

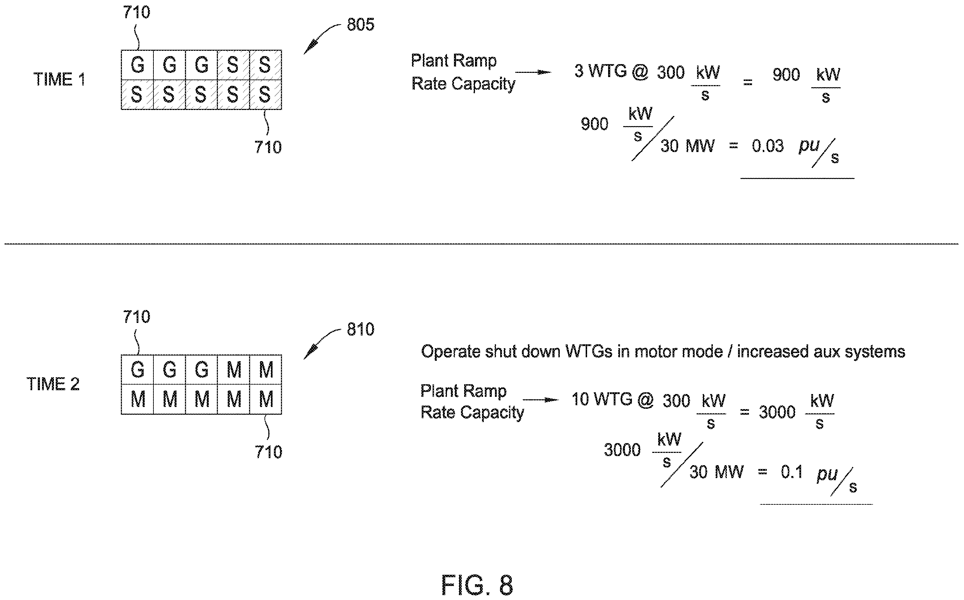

Figure 8 illustrates exemplary operation of a wind power plant providing increased ramp rate capacity during low-wind conditions, according to one embodiment. The wind power plant includes ten wind turbine generators 710. At Time 1, seven of the ten wind turbine generators 710 cannot generate a minimum threshold amount of power due to the current wind conditions. As discussed above, the minimum threshold amount of power can be determined by administrative regulation (*e.g*., local grid codes) or operational considerations for the wind turbine generator, and in some cases can be specified as a portion of the rated power of the wind turbine generator. Accordingly, the controller determines a configuration 805 in which the seven wind turbine generators 710 are shut down ("S"; hatched). Based on the three generating wind turbine generators 710, the plant ramp rate capacity is 900 kW/s (3 x 300 kW/s), which corresponds to 0.03 pu/s.

However, at Time 2, the controller determines an alternate configuration 810, in which the seven shut down wind turbine generators 710 are transitioned into a motor mode ("M"). Assuming that a wind turbine generator 710 can ramp as quickly in the motor mode as in the generation mode, the plant ramp rate capacity with all ten wind turbine generators remains at 3,000 kW/s (10 x 300 kW/s), which corresponds to 0.1 pu/s (3,000 kW/s / 30 MW). However, even if the ramp rate were slower in the motor mode than in the generation mode, the wind power plant ramp rate capacity may be increased simply by virtue of operating one or more wind turbine generators in a motor mode, as compared to merely leaving wind turbine generators shut down due to low-wind conditions.

In the preceding, reference is made to embodiments presented in this disclosure. However, the scope of the present disclosure is not limited to specific described embodiments. Instead, any combination of the preceding features and elements, whether related to different embodiments or not, is contemplated to implement and practice contemplated embodiments. Furthermore, although embodiments disclosed herein may achieve advantages over other possible solutions or over the prior art, whether or not a particular advantage is achieved by a given embodiment is not limiting of the scope of the present disclosure. Thus, the preceding aspects, features, embodiments and advantages are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, the embodiments disclosed herein may be embodied as a system, method or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium is any tangible medium that can contain, or store a program for use by or in connection with an instruction execution system, apparatus or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described above with reference to flowchart illustrations and/or block diagrams of methods, apparatus (systems) and computer program products according to embodiments presented in this disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In view of the foregoing, the scope of the present disclosure is determined by the claims that follow.

## Claims

1. A method of frequency regulation of an electrical grid operatively coupled with at least one wind turbine generator, the method comprising:
operating the wind turbine generator to consume electrical power from the electrical grid, wherein operating the wind turbine generator to consume electrical power comprises
increasing the power consumption with increasing grid frequencies if the grid frequency is above a threshold frequency (fnom+f1) located above a nominal grid frequency (fnom) to provide downward frequency regulation, and
decreasing the power consumption with decreasing grid frequencies if the grid frequency is below a threshold frequency (fnom-f1) located below the nominal grid frequency (fnom) to provide upward frequency regulation.

2. The method of claim 1, wherein operating the wind turbine generator to consume electrical power comprises operating the wind turbine generator in a motor mode.

3. The method of claim 1 or 2, wherein the wind turbine generator is included in a wind turbine having at least one auxiliary system, the method further comprising:
operating the auxiliary system to increase its electrical power consumption.

4. The method according to any of claims 1 to 3, further comprising:
determining a grid frequency of the electrical grid,
wherein operating the wind turbine generator to consume electrical power is performed responsive to determining the grid frequency exceeds a threshold value.

5. The method according to any of claims 1 to 4, further comprising:
determining wind conditions at the wind turbine generator,
wherein operating the wind turbine generator to consume electrical power is performed when the wind conditions are not sufficient for the wind turbine generator to generate a minimum threshold power output.

6. The method according to any of claims 1 to 5, further comprising:
operating at least one of the plurality of wind turbine generators to consume electrical power, thereby increasing a ramp rate capacity of a wind power plant comprising a plurality of wind turbine generators.

7. The method according to 6, wherein the at least one wind turbine generator is in a shut down state due to wind conditions at the wind power plant.

8. A control arrangement for providing frequency regulation of an electrical grid operatively coupled with one or more wind turbine generators, the control arrangement comprising:
a computer processor coupled with at least a first of the wind turbine generators and configured to operate the first wind turbine generator to consume electrical power from the electrical grid, wherein the control arrangement is arranged to operate the first wind turbine generator to,
increase its power consumption with increasing grid frequencies if the grid frequency is above a threshold frequency (fnom+f1) located above a nominal grid frequency (fnom) to provide downward frequency regulation, and to
decrease its power consumption with decreasing grid frequencies if the grid frequency is below a threshold frequency (fnom-f1) located below the nominal grid frequency (fnom) to provide upward frequency regulation.

9. The control arrangement of claim 8, wherein operating the first wind turbine generator to consume electrical power comprises the computer processor signaling the first wind turbine generator to operate in a motor mode.

10. The control arrangement of claim 8 or 9, wherein the first wind turbine generator is included in a wind turbine having at least one auxiliary system, wherein the computer processor is further configured to operate the auxiliary system to increase its electrical power consumption.

11. The control arrangement according to any of claims 8 to 10, further comprising:
a determination module coupled with the computer processor and configured to determine a grid frequency of the electrical grid,
wherein the computer processor is configured to operate the wind turbine generator to consume electrical power responsive to determining the grid frequency exceeds a threshold value.

12. The control arrangement according to any of claims 8 to 11, further comprising:
a determination module coupled with the computer processor and configured to determine wind conditions at the first wind turbine generator,
wherein the computer processor is configured to operate the wind turbine generator to consume electrical power when the wind conditions are not sufficient for the first wind turbine generator to generate a minimum threshold power output.

## Patentansprüche

1. Verfahren zur Frequenzregulierung eines Stromnetzes, das betriebsfähig mit mindestens einer Windkraftanlage gekoppelt ist, das Verfahren umfassend:
Betreiben der Windkraftanlage, um elektrischen Strom von dem Stromnetz zu verbrauchen, wobei die Windkraftanlage zu betreiben, um elektrischen Strom zu verbrauchen, umfasst
Erhöhen des Stromverbrauchs mit steigenden Netzfrequenzen, falls die Netzfrequenz über einer Schwellenfrequenz (fnom+f1) ist, die über einer nominalen Netzfrequenz (fnom) liegt, um Abwärtsfrequenzregulierung bereitzustellen, und
Verringern des Stromverbrauchs mit sinkenden Netzfrequenzen, falls die Netzfrequenz unter einer Schwellenfrequenz (fnom-f1) ist, die unter der nominalen Netzfrequenz (fnom) liegt, um Aufwärtsfrequenzregulierung bereitzustellen.

2. Verfahren nach Anspruch 1, wobei die Windkraftanlage zu betreiben, um elektrischen Strom zu verbrauchen, umfasst, die Windkraftanlage in einem Motormodus zu betreiben.

3. Verfahren nach Anspruch 1 oder 2, wobei die Windkraftanlage in einer Windkraftanlage beinhaltet ist, die mindestens ein Hilfssystem aufweist, das Verfahren weiter umfassend:
Betreiben des Hilfssystems, um seinen elektrischen Stromverbrauch zu erhöhen.

4. Verfahren nach einem der Ansprüche 1 bis 3, weiter umfassend:
Ermitteln einer Netzfrequenz des Stromnetzes,
wobei Betreiben der Windkraftanlage, um elektrischen Strom zu verbrauchen, in Antwort darauf durchgeführt wird, dass ermittelt wird, dass die Netzfrequenz einen Schwellenwert übersteigt.

5. Verfahren nach einem der Ansprüche 1 bis 4, weiter umfassend:
Ermitteln von Windbedingungen bei der Windkraftanlage,
wobei Betreiben der Windkraftanlage, um elektrischen Strom zu verbrauchen, durchgeführt wird, wenn die Windbedingungen für die Windkraftanlage nicht ausreichend sind, um eine Mindestschwellenausgangsleistung zu erzeugen.

6. Verfahren nach einem der Ansprüche 1 bis 5, weiter umfassend:
Betreiben mindestens einer der Vielzahl von Windkraftanlagen, um elektrischen Strom zu verbrauchen, wodurch eine Rampenratenkapazität eines Windparks erhöht wird, der eine Vielzahl von Windkraftanlagen umfasst.

7. Verfahren nach Anspruch 6, wobei die mindestens eine Windkraftanlage aufgrund von Windbedingungen bei dem Windpark in einem heruntergefahrenen Zustand ist.

8. Steuerungsanordnung zum Bereitstellen von Frequenzregulierung eines Stromnetzes, das betriebsfähig mit einem oder mehreren Windkraftanlagen gekoppelt ist, wobei die Steuerungsanordnung umfasst:
einen Computerprozessor, der mit mindestens einer ersten der Windkraftanlagen gekoppelt ist und konfiguriert ist, die erste Windkraftanlage zu betreiben, um elektrischen Strom aus dem Stromnetz zu verbrauchen, wobei die Steuerungsanordnung eingerichtet ist, die erste Windkraftanlage zu betreiben zum
Erhöhen ihres Stromverbrauchs mit steigenden Netzfrequenzen, falls die Netzfrequenz über einer Schwellenfrequenz (fnom+f1) ist, die über einer nominalen Netzfrequenz (fnom) liegt, um Abwärtsfrequenzregulierung bereitzustellen, und zum
Verringern ihres Stromverbrauchs mit sinkenden Netzfrequenzen, falls die Netzfrequenz unter einer Schwellenfrequenz (fnom-f1) ist, die unter der nominalen Netzfrequenz (fnom) liegt, um Aufwärtsfrequenzregulierung bereitzustellen.

9. Steuerungsanordnung nach Anspruch 8,
wobei Betreiben der ersten Windkraftanlage, um elektrischen Strom zu verbrauchen, umfasst, dass der Computerprozessor der ersten Windkraftanlage signalisiert, in einem Motormodus zu arbeiten.

10. Steuerungsanordnung nach Anspruch 8 oder 9, wobei die erste Windkraftanlage in einer Windkraftanlage beinhaltet ist, die mindestens ein Hilfssystem aufweist, wobei der Computerprozessor weiter konfiguriert ist, das Hilfssystem zu betreiben, um seinen elektrischen Stromverbrauch zu erhöhen.

11. Steuerungsanordnung nach einem der Ansprüche 8 bis 10, weiter umfassend:
ein Ermittlungsmodul, das mit dem Computerprozessor gekoppelt ist und konfiguriert ist, eine Netzfrequenz des Stromnetzes zu ermitteln,
wobei der Computerprozessor konfiguriert ist, die Windkraftanlage zu betreiben, um elektrischen Strom in Antwort darauf zu verbrauchen, dass ermittelt wird, dass die Netzfrequenz einen Schwellenwert übersteigt.

12. Steuerungsanordnung nach einem der Ansprüche 8 bis 11, weiter umfassend:
ein Ermittlungsmodul, das mit dem Computerprozessor gekoppelt ist und konfiguriert ist, Windbedingungen bei der ersten Windkraftanlage zu ermitteln,
wobei der Computerprozessor konfiguriert ist, die Windkraftanlage zu betreiben, um elektrischen Strom zu verbrauchen, wenn die Windbedingungen für die erste Windkraftanlage nicht ausreichend sind, um eine Mindestschwellenausgangsleistung zu erzeugen.

## Revendications

1. Procédé de régulation de fréquence d'un réseau électrique couplé en fonctionnement avec au moins une éolienne, le procédé comprenant :
l'actionnement de génératrice éolienne pour consommer la puissance électrique du réseau électrique, dans lequel l'actionnement de la génératrice éolienne pour consommer la puissance électrique comprend
l'augmentation de la consommation de puissance avec des fréquences de réseau croissantes si la fréquence de réseau est supérieure à une fréquence seuil (fnom+f1) située au-dessus d'une fréquence de réseau nominale (fnom) pour fournir une régulation de fréquence descendante, et
la diminution de la consommation de puissance avec des fréquences de réseau décroissantes si la fréquence de réseau est inférieure à une fréquence seuil (fnom-f1) située sous la fréquence de réseau nominale (fnom) pour fournir une régulation de fréquence ascendante.

2. Procédé selon la revendication 1, dans lequel l'actionnement de la génératrice éolienne pour consommer la puissance électrique comprend l'actionnement de la génératrice éolienne dans un mode de moteur.

3. Procédé selon la revendication 1 ou 2, dans lequel la génératrice éolienne est incluse dans une éolienne présentant au moins un système auxiliaire, le procédé comprenant en outre :
l'actionnement du système auxiliaire pour augmenter sa consommation de puissance électrique.

4. Procédé selon l'une quelconque des revendications 1 à 3, comprenant en outre :
la détermination d'une fréquence du réseau électrique ;
dans lequel l'actionnement de la génératrice éolienne pour consommer la puissance électrique est réalisé en réponse à la détermination que la fréquence de réseau excède une valeur seuil.

5. Procédé selon l'une quelconque des revendications 1 à 4, comprenant en outre :
la détermination de conditions de vent au niveau de la génératrice éolienne,
dans lequel l'actionnement de la génératrice éolienne pour consommer la puissance électrique est réalisé lorsque les conditions de vent ne sont pas suffisantes pour que la génératrice éolienne génère une sortie de puissance seuil minimum.

6. Procédé selon l'une quelconque des revendications 1 à 5, comprenant en outre :
l'actionnement d'au moins une de la pluralité de génératrices éoliennes pour consommer une puissance électrique, augmentant ainsi une capacité de taux d'accroissement d'une centrale éolienne comprenant une pluralité de génératrices éoliennes.

7. Procédé selon la revendication 6, dans lequel l'au moins une génératrice éolienne est dans un état d'arrêt dû aux conditions de vent au niveau de la centrale éolienne.

8. Agencement de commande pour la fourniture d'une régulation de fréquence d'un réseau électrique couplé en fonctionnement à une ou plusieurs génératrices éoliennes, l'agencement de commande comprenant :
un processeur informatique couplé à au moins une première des génératrices éoliennes et configuré pour actionner la première génératrice éolienne pour consommer une puissance électrique du réseau électrique, dans lequel l'agencement de commande est agencé pour actionner la première génératrice éolienne pour,
augmenter sa consommation de puissance avec des fréquences de réseau croissantes si la fréquence de réseau est supérieure à une fréquence seuil (fnom+f1) située au-dessus d'une fréquence de réseau nominale (fnom) pour fournir une régulation de fréquence descendante, et pour
diminuer sa consommation de puissance avec des fréquences de réseau décroissantes si la fréquence de réseau est inférieure à une fréquence seuil (fnom-f1) située sous la fréquence de réseau nominale (fnom) pour fournir une régulation de fréquence ascendante.

9. Agencement de commande selon la revendication 8, dans lequel l'actionnement de la première génératrice éolienne pour consommer de la puissance électrique comprend le signalement par le processeur informatique à la première génératrice éolienne de fonctionner dans un mode de moteur.

10. Agencement de commande selon la revendication 8 ou 9, dans lequel la première génératrice éolienne est incluse dans une éolienne présentant au moins un système auxiliaire, dans lequel le processeur informatique est en outre configuré pour actionner le système auxiliaire afin qu'il augmente sa consommation de puissance électrique.

11. Agencement de commande selon l'une quelconque des revendications 8 à 10, comprenant en outre :
un module de détermination couplé au processeur informatique et configuré pour déterminer une fréquence du réseau électrique,
dans lequel le processeur informatique est configuré pour actionner la génératrice éolienne pour qu'elle consomme une puissance électrique en réponse à la détermination que la fréquence de réseau excède une valeur seuil.

12. Agencement de commande selon l'une quelconque des revendications 8 à 11, comprenant en outre :
un module de détermination couplé au processeur informatique pour actionner la génératrice éolienne pour qu'elle consomme la puissance électrique lorsque les conditions de vent ne sont pas suffisantes afin que la première génératrice éolienne génère une sortie de puissance seuil minimum.
